# EUROPEAN PATENT SPECIFICATION

(11) **EP 2 412 233 B1**
(45) Date of publication and mention of the grant of the patent: **06.03.2013**
(21) Application number: 11175813.2
(22) Date of filing: 28.07.2011
(51) Int. Cl.: A01K 5/00

(54) **MIXING DEVICE FOR FOLDER**
FUTTERMISCHVORRICHTUNG
DISPOSITIF POUR MELANGER DU FOURRAGE

(30) Priority: 29.07.2010 NL 2005170
(43) Date of publication of application: 01.02.2012
(73) Proprietor: Trioliet Holding B.V., 7575 BE Oldenzaal (NL)
(72) Inventor: Liet, Cornelis Hendricus, 7581 TJ Losser (NL)
(74) Representative: De Vries & Metman

(56) References cited:
- EP-A1- 1 527 678
- EP-A2- 1 175 828
- EP-A2- 1 330 951
- WO-A1-03/030626
- US-B1- 7 281 843

## Description

The invention pertains to a mixing device, in particular for fodder, such as grass, maize and/or feed concentrate.

From EP 1 175 828 a mixing device which can be driven by a tractor is known which has two augers in a mixing chamber, with a distributor cone being provided against the wall in the space between the augers on either side of the mixing chamber. When the mixing chamber is supplied with the fodder to be mixed, the augers are operated. Rotating the spiral mixing blade causes the fodder to be moved upwards, and a horizontal flow of the fodder is also created. This flow is important for a homogeneous mixing of the fodder, which is poured into the mixing chamber from above in random quantities. This flow also has to lead as much as possible to an equal dosing of the fodder. What has to be prevented is that a large quantity of fodder is still present in one section of the mixing chamber, while the section part is already empty. When the dosing takes up a great deal of time and proceeds in an irregular fashion, then the speed of the tractor has to be adjusted to compensate. This effect is further reinforced by the augers rotating more slowly when the tractor is driven at a lower speed. Because of the flowing pressure and the fodder being moved upwards, the fodder is conveyed over the distributor cone and falls into the space of the other auger on the other side of the distributor cone. It was found that this periodic lifting of the fodder requires a lot of power. In addition, it is important that the section between the augers also will be completely emptied when dosing. If any fodder should be left behind, fermentation or mould might occur, especially when the mixing device has been parked for some time. The object of the invention is to provide a mixing device where the horizontal passage between the spaces of the different augers is hampered as little as possible. Preferably, the design of the device has to be such that as little power as possible is required.

The object of the invention is attained with a mixing device comprising at least two rotatably driven vertical augers with a spiral mixing blade. The augers are arranged in a mixing chamber with a bottom and a wall extending around the augers. In a space between the augers on either side of the mixing chamber against the wall a distributor cone with a bevelled edge is provided, which extends upwards from a lower tip on the bottom to an upper tip on or near the wall. On either side of the bevelled edge a guiding surface inclines obliquely towards the bottom. On the undersides of the bevelled edge of the distributor cones a shoe is mounted with a guiding surface on either side of a free folding edge. Both of the guiding surfaces have a side which connects to the bottom and a side which connects to the distributor cone. The incline of the folding edge is less steep than the incline of the bevelled edge of the distributor cone.

This measure makes it possible for the distributor cones to have a steeper design, while the space between the shoes mounted opposite one another can be kept small, thus preventing that fodder will be left behind on the bottom of the mixing chamber, outside the reach of the augers. Because the distributor cones can have a steeper design, the passage above the shoes can stay as wide as possible, so that the horizontal flow-through of the fodder will be hampered as little as possible.

The shoe can be an integral part of the distributor cone or it can be designed as a separately mounted part.

The free folding edge of the guiding surface of the shoe is for instance at an angle of 30 degrees or more to the bottom.

The upper tip of the bevelled edge of the distributor cone can for instance have shifted vis-à-vis the lower tip of the bevelled edge in the direction of the auger, which rotates towards the said distributor cone. In plane projection, the bevelled edge of the distributor cone as a result assumes a sharp angle with the line between the points of rotation of the two augers. This improves the guiding of the fodder still further.

The two guiding surfaces on either side of the bevelled edge can be flat or they can for instance be curved such that the line of intersection with the bottom has a radius of curvature which, with play, corresponds to the largest radius of the auger.

Around the bottom reach of at least one of the augers a wear ridge or wear strip can be provided which is interrupted in the space between the shoes mounted opposite one another. The wear ridge can for instance be made of a wear-resistant metal.

At the free bevelled edge the distributor cone can be provided with a clearance face which inclines obliquely laterally in the direction of an auger rotating towards the clearance face. Laterally, the clearance face is at an angle to the line between the points of rotation of the augers. This angle may be 2 - 10 degrees, for instance 4 - 8 degrees, for instance about 6 degrees. It was found that as a result of this, considerably less power is required to transfer the fodder from one side of the distributor cone to the other. The flow-through takes place in more efficient fashion.

Longitudinally, the clearance face can for instance be at an angle of 36 degrees or less vis-à-vis the vertical. As a result of this, the distributor cone has a steeper inclination than for instance the distributor cones in EP 1 175 828. The passage between the two distributor cones becomes wider as a result, allowing the fodder to pass by the distributor cones more easily and greatly reducing the risk of fodder, particularly when it is made up of stalks, such as hay or grass, becoming wedged.

The clearance face can for instance be designed such that it tapers and narrows from the bottom to the top.

The top of the clearance face and/or of the free bevelled edge of the distributor cone can have shifted vis-à-vis the underside of the clearance face in the direction of an auger rotating towards the distributor cone. Alternatively, however, the top of the clearance face and/or of the free bevelled edge lies shifted vis-à-vis the underside of the clearance face in the direction of an auger rotating away from the distributor cone. In a further possible embodiment, the top of the clearance face and/or of the free bevelled edge can be at the same horizontal distance from the augers as from the underside of the clearance face and of the free bevelled edge, respectively.

The folding edge of the shoe, in horizontal projection, can for instance be transverse to the line between the two augers. Alternatively, however, the folding edge of the shoe can be designed such that, in horizontal projection, it inclines obliquely in the direction of an auger rotating towards the shoe or, on the contrary, in the direction of an auger rotating away from the shoe.

The side edges of the shoe which connect to the bottom will as a rule be more or less immediately adjacent to the area where the auger lobes are moved across the bottom. The location of the side edges thus is essentially fixed and will remain essentially unchanged, irrespective of the path followed by the free folding edge of the shoe.

Very good mixing at low power can for instance be achieved using an embodiment where the upper tip of the bevelled edge of the distributor cone has shifted vis-à-vis the lower tip in the direction of the auger rotating towards the distributor cone, while in the case of the shoe the upper tip of the folding edge has shifted vis-à-vis the lower tip in the direction of the auger rotating away from the shoe.

The free bevelled edge of the distributor cone can for instance be a linear edge or a convexly or concavely curved edge. In the same way the folding edge of the shoe can for instance be a linear edge or a convexly or concavely curved edge.

If so desired, the mixing chamber wall may be provided with a flanged edge near the distributor cone, with the top of the clearance face being positioned at the free edge of the flanged edge.

The mixing device can for instance be a mobile device. In that case the device can for instance be pulled by means of a tractor. In that case the augers can also be driven by the tractor.

The augers can for instance be driven with the same senses of rotation, but if so desired, they may also be driven with opposite senses of rotation.

The mixing blade of the augers can for instance be equipped with one or more knives.

The mixing blade of the auger, which is spiral-shaped, can be of uniform width. In another embodiment, the width of the mixing blade can decrease evenly from the bottom to the top.

The invention will be further elucidated with reference to the drawing, wherein:
- Figure 1A:: shows, in top view, a mixing device according to the invention;
- Figure 1B:: shows the mixing device in longitudinal section along the line C-C in Figure 1A;
- Figure 1C:: shows the mixing device in cross-section along the line D-D in Figure 1A;
- Figure 1D:: shows the mixing device in cross-section along the line E-E in Figure 1A;
- Figure 2A:: shows, in top view, a second possible embodiment of the mixing device according to the invention;
- Figure 2B:: shows the mixing device of Figure 2A in longitudinal section along the line C-C;
- Figure 3A:: shows, in longitudinal section, a third possible embodiment of the mixing device according to the invention;
- Figure 3B:: shows the mixing device of Figure 3A in cross-section along the line B-B;
- Figure 4A:: shows, in top view, a fourth possible embodiment of the mixing device according to the invention;
- Figure 4B:: shows the mixing device of Figure 4A in longitudinal section along the line H-H;
- Figure 5A:: shows, in top view, a fifth possible embosiment of the mixing device according to the invention;
- Figure 5B:: shows the mixing device of Figure 5A in longitudinal section along the line C-C;
- Figure 6:: shows, in top view, a sixth possible embodiment of the mixing device according to the invention;
- Figure 7:: shows, in top view, a seventh possible embodiment of the mixing device according to the invention.

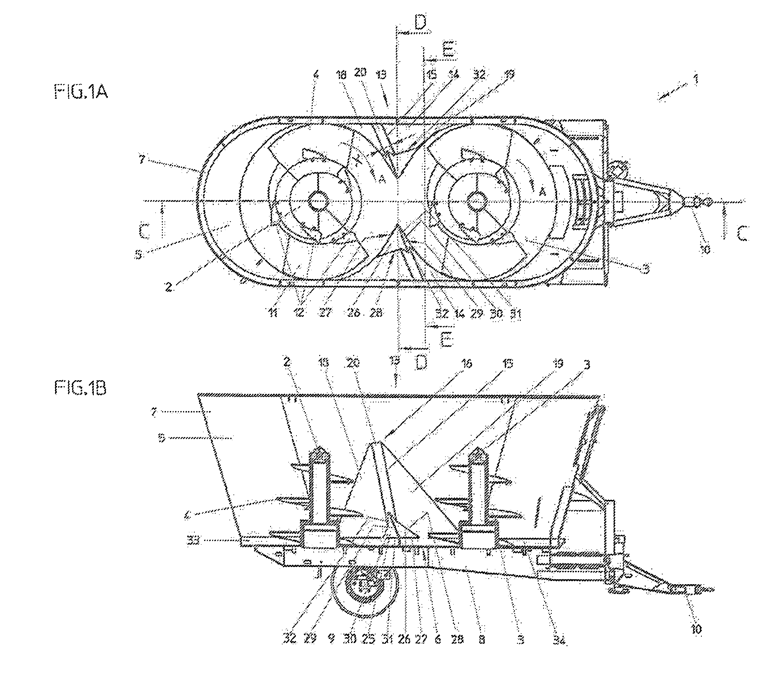

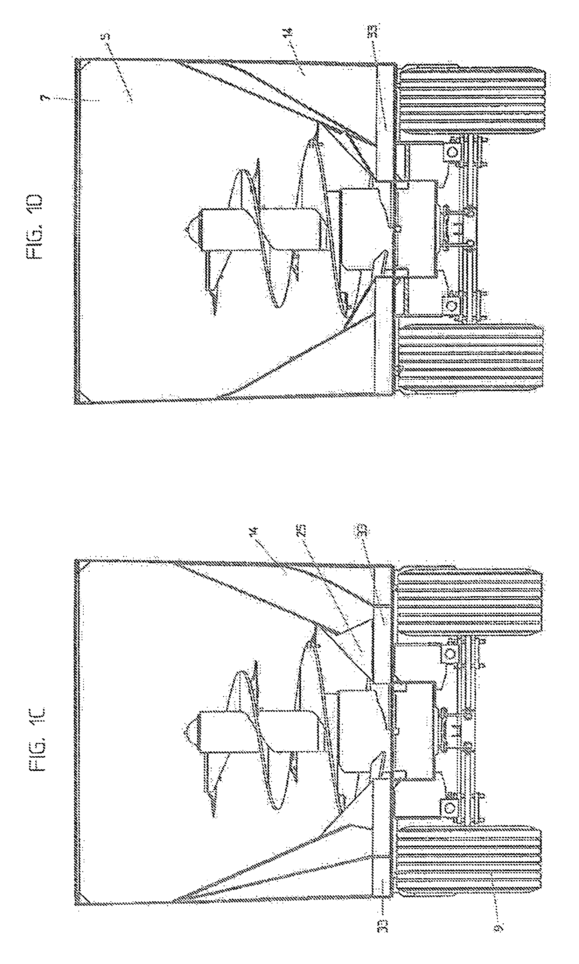

Figure 1A shows, in top view, a mixing device 1 according to the invention, which is shown in longitudinal section along the line C-C in Figure 1B. In Figure 1C it is shown in cross-section along the line D-D, while Figure 1D shows a cross-section along the line E-E in Figure 1A.

The mixing device 1 comprises two rotatably driven vertical augers 2, 3, provided with a spiral mixing blade 4. The augers 2, 3 are arranged in a mixing chamber 5 with a bottom 6 and an oval closed wall 7 extending around the augers. The mixing device 1 is provided with a chassis 8 with two wheels 9 and a coupling device 10 for coupling to a tractor (not shown). When the mixing device 1 is coupled to a tractor, the tractor can also rotatingly drive the two augers 2, 3 via an unshown drive coupling. The two augers 2, 3 in that case rotate with the same sense of rotation, depicted in the drawing by means of arrows A.

The augers 2, 3 further comprise two lobes 11 rotating across the bottom 6. The mixing blade or worm blade 4 is spiral-shaped and gradually decreases in width from the bottom to the top. The mixing blade 4 is equipped with a number of knives 12.

In the area 13 between the augers 2, 3 on either side of the mixing chamber 5 against the wall 7 a distributor cone 14 is provided, with a bevelled edge or folding edge 15 inclining upwards from the bottom 6 to a top 16 on the wall 7. On either side of the bevelled edge 15 of the distributor cone 14, a guiding surface 18, 19 inclines obliquely towards the bottom 6 with a radius of curvature which, with play, corresponds to the largest radius of the auger 2, 3. The distributor cone 14 on its bevelled edge 15 is provided with a clearance face 20, which inclines obliquely in the lateral direction X in the direction of the auger 2 rotating towards the clearance face 20. The lateral direction X of the clearance face 20 is at an angle α of about 10 degrees to the line C-C between the points of rotation of the augers 2,3.

The longitudinal axis of the clearance face 20 is at an angle of about 1 degree or more vis-à-vis the vertical, depending on the width of the mixing chamber, which in practice tends to vary from about 1.6 - about 2.4 metres. Because of this the folding edge or top edge 15 of the distributor cone 14 is steep and the passage between the two distributor cones 14 is wide, so that fodder can easily flow through between the two auger spaces.

The top 16 of the clearance face 20 lies shifted vis-à-vis the underside of the clearance face 20 in the direction of an auger 2 rotating towards the distributor cone 14.

On the underside of the clearance face 20 a shoe 25 is mounted. The shoe 25 is provided with a triangular or polygonal guiding surface 26 with a side 27 connecting to the bottom 6 by means of wear strips 33, 34, a side 28 connecting to the distributor cone 14, and a folding edge 29. The folding edge 29 of the shoe 25, in horizontal projection, inclines obliquely from top to bottom in the direction of an auger 2 rotating towards the shoe 25. On the other side of the folding edge 29 the shoe 25 comprises a second guiding surface 30 with a side 31 connecting to the bottom 6 by means of wear strips 33, 34 and a side connectingh to the distributor cone 14.

Around the lowest outer circumference of the augers 2, 3, wear strips 33, 34 are provided with some play, extending around the augers 2, 3 as fully as possible.

In horizontal projection, as shown in Figure 1A, the folding edge of the shoe 25 and the clearance face 20 are in the same straight line.

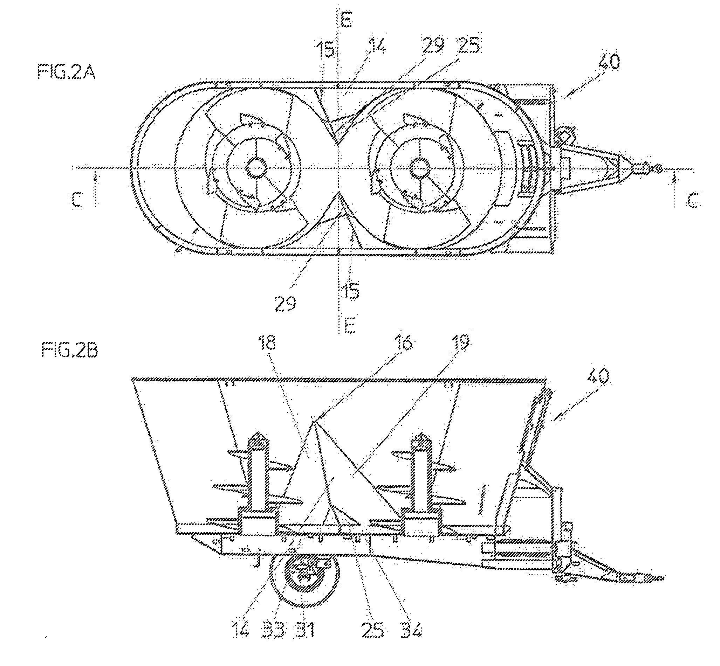

Figures 2A and 2B show another possible embodiment 40, wherein the distributor cones 14 are not provided with a clearance face. In horizontal projection, as shown in Figure 2A, the folding edge 29 of the shoe 25 and the bevelled edge 15 of the distributor cone 14 are in the same straight line. Wear strips 33, 34 extend around the lowest reach of the augers 2, 3, with an interruption in the space between the shoes 25. The undersides of the shoes 25 and the distributor cones 14 rest on the wear strips 33, 34.

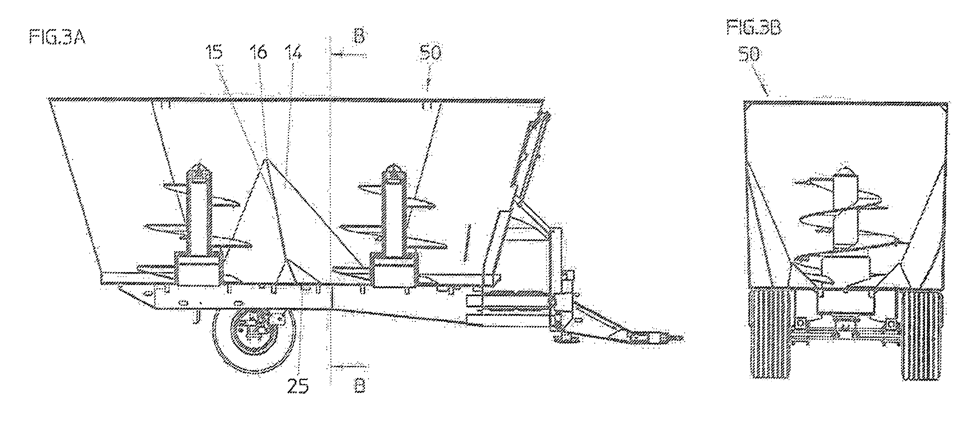

Figures 3A and 3B show an embodiment 50, which corresponds to the embodiment 40 from Figures 2A and 2B, except that it does not have the wear strips 33, 34. The distributor cones 14 and the shoes 25 rest directly on the bottom 6.

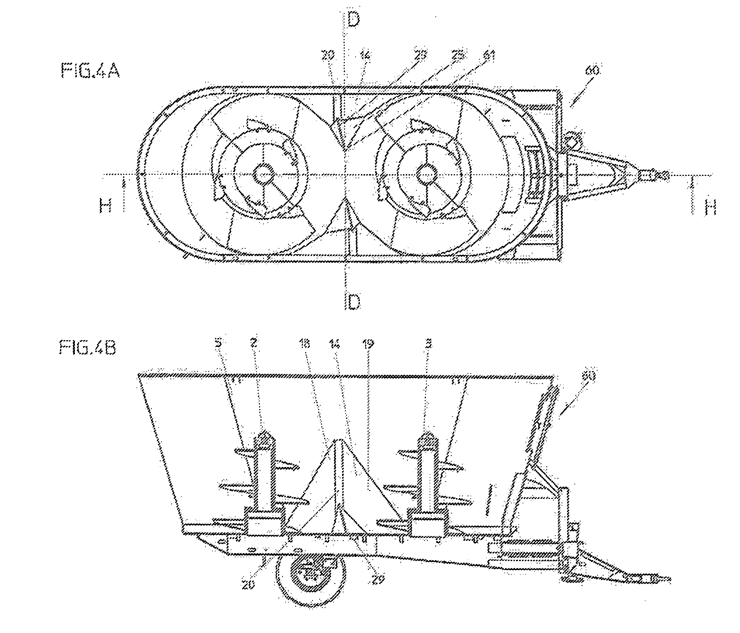

Figures 4A and 4B show an embodiment 60, wherein the distributor cone 14 is provided with a clearance face 20. The clearance faces 20 of the two distributor cones 14 are both at right angles to the line H-H through the points of rotation of the augers 2, 3. The two clearance faces 20 lie slightly shifted vis-à-vis the diameter F-F of the mixing chamber 5 in the direction of the augers 2 and 3, respectively, rotating towards the shoe 25. The folding edges 29 of the shoes 25 extend from a point on the clearance face 20 to a lower tip 61 on the bottom 6 on the diameter E-E. In horizontal projection, as shown in Figure 4A, the folding edge 29 of the shoe 25 thus is at a slight angle to the longitudinal axis of the clearance face 20. The shown embodiment 60 is shown without wear strips, but it can also be realised including wear strips.

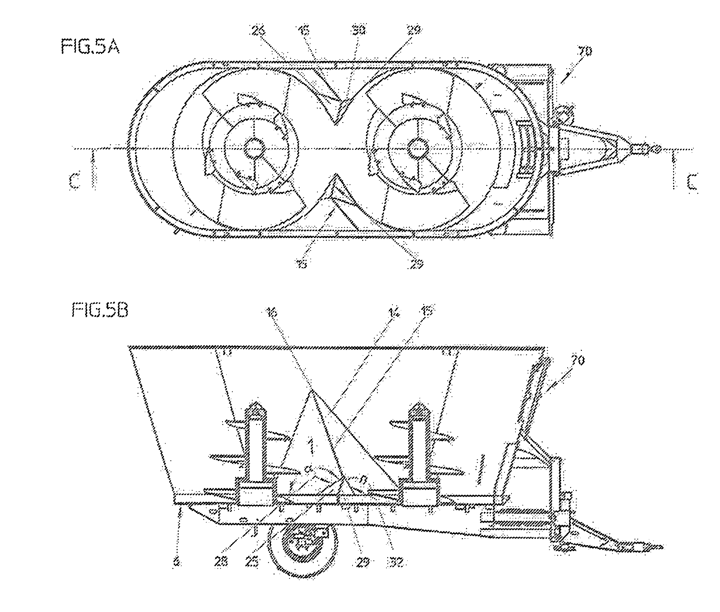

Figures 5A and 5B show an embodiment 70, wherein the upper tip 16 of the bevelled edge 15 of the distributor cone 14 has shifted vis-à-vis the lower tip in the direction of the auger 2, 3 rotating towards the distributor cone 14. In the case of the shoe 25, on the other hand, the upper tip of the folding edge 29 lies shifted vis-à-vis the lower tip in the direction of the auger 2, 3 rotating away from the shoe 25 in question. The bevelled edge 15 of the distributor cone 14 thus makes a kink with the folding edge 29 of the shoe 25 both in the horizontal projection of Figure 5A and in the vertical projection of Figure 5B. The guiding surface of the shoe 25, which faces the auger 2 rotating towards the shoe 25, has a side 28 connecting to the distributor cone 14. This side 28 is longer than the side 32 of the other guiding surface 30 of the shoe 25 facing the other auger 2, 3, which is also adjacent to the distributor cone 14. In addition, the angle α of the side 28 to the bottom 6 in vertical projection as shown in Figure 5B is greater than the angle β between the side 32 and the bottom 6.

The shown embodiment 70 is shown with wear strips 33, 34, but it can also be realised without wear strips.

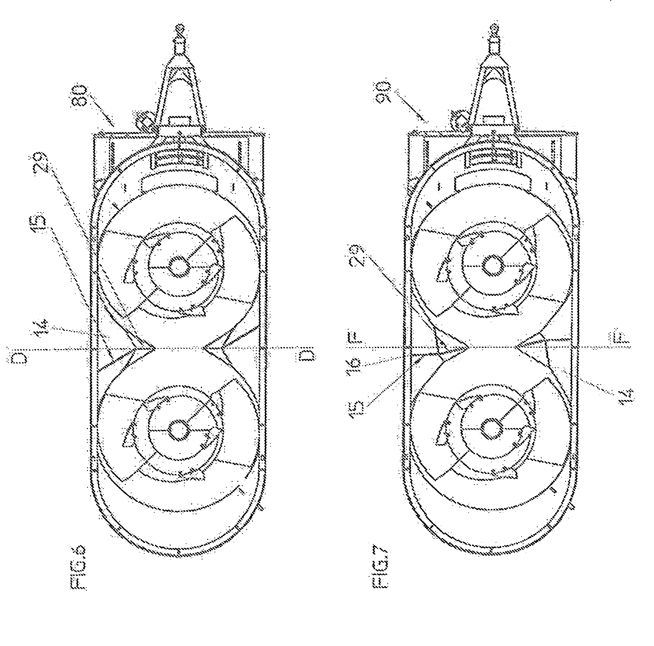

Figure 6 shows an embodiment 80, wherein the upper tip 16 of the bevelled edge 15 of the distributor cone 14 has shifted vis-à-vis the lower tip in the direction of the auger 2, 3 rotating twoards the distributor cone 14. In the case of the shoe 25, on the other hand, both the upper tip and the lower tip of the folding edge 29 are on the diameter E-E extending in transverse direction. This embodiment also can be designed with or without wear strips.

Figure 7 shows an embodiment 90, which corresponds substantially to the embodiment according to Figures 4A and 4B, except that it does not have the clearance face 20. In horizontal projection, as shown in the drawing, the upper tip 16 and the lower tip of the bevelled edge 15 thus are on a line which runs parallel to the diameter E-E extending in transverse direction. The free edge 15 in that case lies slightly shifted vis-à-vis the diameter E-E in the direction of the auger 2, 3 rotating towards the distributor cone 14. In the case of the shoe 25, the upper tip of the folding edge 29 connects to the bevelled edge 15 of the distributor cone 14, while the lower tip is on the diameter E-E.

This embodiment 90 also can be designed with or without wear strips.

## Claims

1. Mixing device (1) comprising at least two rotatably driven vertical augers (2, 3) provided with a spiral mixing blade (4), which augers are arranged in a mixing chamber (5) with a bottom (6) and a wall (7) extending around the augers, wherein in an area (13) between the augers on either side of the mixing chamber against the wall a distributor cone (14) is provided with a bevelled edge (15) which extends upwards from a lower tip on the bottom to a top (16) on or near the wall (7), wherein on either side of the bevelled edge (15) a guiding surface (18, 19) inclines obliquely towards the bottom, **characterised in that** on the underside of the bevelled edge of at least one of the distributor cones (14) a shoe (25) is mounted with on either side of a free folding edge (29) a guiding surface with a side (27) which connects to the bottom and a side (28) which connects to the distributor cone 14), wherein the incline of folding edge (29) is less steep than the incline of the bevelled edge (15) of the distributor cone (14).

2. Mixing device according to claim 1, wherein the top (16) of the bevelled edge (15) of the distributor cone (14) lies shifted vis-à-vis the lower tip of the bevelled edge (15) in the direction of the auger rotating towards the said distributor cone (14).

3. Mixing device according to claim 1, wherein the top (16) of the bevelled edge (15) of the distributor cone (14) lies shifted vis-à-vis the lower tip of the bevelled edge (15) in the direction of the auger rotating away from the said distributor cone (14).

4. Mixing device according to claim 1, 2 or 3, wherein the guiding surfaces (18, 19) are curved such that the line of intersection with the bottom (6) has a radius of curvature which, with play, corresponds to the largest radius of the auger.

5. Mixing device according to any one of the preceding claims, wherein around the lowest reach of at least one of the augers (2, 3) a wear ridge is provided which is interrupted in the space between the opposing shoes.

6. Mixing device according to any one of the preceding claims, wherein the distributor cones are provided with a clearance face (20), which is adjacent to the bevelled edge (15) and inclines obliquely in the lateral direction (X) in the direction of an auger (2) rotating towards the clearance face, wherein the lateral direction of the clearance face is at an angle to the line (A-A) between the points of rotation of the augers.

7. Mixing device according to any one of the preceding claims 6, wherein the clearance face (20) tapers off from the bottom (6) to the top.

8. Mixing device according to any one of preceding claims 6 - 9, wherein the top of the clearance face (20) lies shifted vis-à-vis the underside of the clearance face in the direction of an auger rotating towards the distributor cone (14).

9. Mixing device according to any one of claims 6 - 9, wherein the top of the clearance face (20) lies shifted vis-à-vis the underside of the clearance face in the direction of an auger rotating away from the distributor cone.

10. Mixing device according to any one of preceding claims 6 - 9, wherein the top of the clearance face (20) is at the same horizontal distance from the augers (2, 3) as the underside of the clearance face.

11. Mixing device according to any one of the preceding claims, wherein the folding edge (29) of the shoe (25) in horizontal projection inclines obliquely in the direction of an auger rotating towards the shoe.

12. Mixing device according to any one of preceding claims 1 - 11, wherein the folding edge (29) of the shoe (25) in horizontal projection inclines obliquely in the direction of an auger rotating away from the shoe.

13. Mixing device according to any one of the preceding claims, wherein the opposing shoes (25) have shifted visa-vis one another over a distance in longitudinal direction of the mixing device.

14. Mixing device according to any one of the preceding claims, wherein the upper tip (16) of the bevelled edge (15) of the distributor cone (14) has shifted vis-à-vis the lower tip in the direction of the auger rotating towards the distributor cone (14), while in the case of the shoe (25) the upper tip of the folding edge (29) has shifted vis-à-vis the lower tip in the direction of the auger rotating away from the shoe (25).

## Patentansprüche

1. Mischvorrichtung (1) mit mindestens zwei drehbar angetriebenen senkrechten Schnecken (2, 3), die mit einem Spiralmischflügel (4) versehen sind, wobei die Schnecken in einer Mischkammer (5) mit einem Boden (6) und einer sich um die Schnecken erstreckenden Wand (7) angeordnet sind, wobei in einem Bereich (13) zwischen den Schnecken auf jeder Seite der Mischkammer an der Wand ein Verteilerkegel (14) mit einer abgeschrägten Kante (15) vorgesehen ist, die sich von einer unteren Spitze auf dem Boden zu einem Oberteil (16) auf oder nahe der Wand (7) erstreckt, wobei sich auf jeder Seite der abgeschrägten Kante (15) eine Führungsfläche (18, 19) schräg zum Boden neigt,
**dadurch gekennzeichnet, dass** auf der Unterseite der abgeschrägten Kante mindestens eines der Verteilerkegel (14) ein Schuh (25) angeordnet ist, der auf jeder Seite einer freien Faltkante (29) eine Führungsfläche mit einer Seite (27), die sich mit dem Boden verbindet, und einer Seite (28) hat, die sich mit dem Verteilerkegel (14) verbindet, wobei die Neigung der Faltkante (29) weniger steil als die Neigung der abgeschrägten Kante (15) des Verteilerkegels (14) ist.

2. Mischvorrichtung nach Anspruch 1, wobei das Oberteil (16) der abgeschrägten Kante (15) des Verteilerkegels (14) gegenüber der unteren Spitze der abgeschrägten Kante (15) in Richtung der Schnecke verschoben liegt, die zum Verteilerkegel (14) dreht.

3. Mischvorrichtung nach Anspruch 1, wobei das Oberteil (16) der abgeschrägten Kante (15) des Verteilerkegels (14) gegenüber der unteren Spitze der abgeschrägten Kante (15) in Richtung der Schnecke verschoben liegt, die vom Verteilerkegel (14) weg dreht.

4. Mischvorrichtung nach Anspruch 1, 2 oder 3, wobei die Führungsflächen (18, 19) so gekrümmt sind, dass die Schnittlinie mit dem Boden (6) einen Krümmungsradius hat, der mit Spiel dem größten Radius der Schnecke entspricht.

5. Mischvorrichtung nach einem der vorstehenden Ansprüche, wobei um die tiefste Reichweite mindestens einer der Schnecken (2, 3) ein Verschleißsteg vorgesehen ist, der im Raum zwischen den gegenüberliegenden Schuhen unterbrochen ist.

6. Mischvorrichtung nach einem der vorstehenden Ansprüche, wobei die Verteilerkegel mit einer Abstandsfläche (20) versehen sind, die benachbart zur abgeschrägten Kante (15) ist und sich in Querrichtung (X) schräg in Richtung einer Schnecke (2) neigt, die zur Abstandsfläche dreht, wobei die Querrichtung der Abstandsfläche einen Winkel zur Linie (A-A) zwischen den Drehpunkten der Schnecken hat.

7. Mischvorrichtung nach einem der vorstehenden Ansprüche 6, wobei die Abstandsfläche (20) vom Boden (6) zum Oberteil zuläuft.

8. Mischvorrichtung nach einem der vorstehenden Ansprüche 6 bis 9, wobei das Oberteil der Abstandsfläche (20) gegenüber der Unterseite der Abstandsfläche in Richtung einer Schnecke verschoben liegt, die zum Verteilerkegel (14) dreht.

9. Mischvorrichtung nach einem der Ansprüche 6 bis 9, wobei das Oberteil der Abstandsfläche (20) gegenüber der Unterseite der Abstandsfläche in Richtung einer Schnecke verschoben liegt, die vom Verteilerkegel weg dreht.

10. Mischvorrichtung nach einem der vorstehenden Ansprüche 6 bis 9, wobei das Oberteil der Abstandsfläche (20) den gleichen waagerechten Abstand von den Schnecken (2, 3) wie die Unterseite der Abstandsfläche hat.

11. Mischvorrichtung nach einem der vorstehenden Ansprüche, wobei sich die Faltkante (29) des Schuhs (25) in waagerechter Projektion schräg in Richtung einer Schnecke neigt, die zum Schuh dreht.

12. Mischvorrichtung nach einem der vorstehenden Ansprüche 1 bis 11, wobei sich die Faltkante (29) des Schuhs (25) in waagerechter Projektion schräg in Richtung einer Schnecke neigt, die vom Schuh weg dreht.

13. Mischvorrichtung nach einem der vorstehenden Ansprüche, wobei sich die gegenüberliegenden Schuhe (25) über einen Abstand in Längsrichtung der Mischvorrichtung zueinander verschoben haben.

14. Mischvorrichtung nach einem der vorstehenden Ansprüche, wobei sich die obere Spitze (16) der abgeschrägten Kante (15) des Verteilerkegels (14) gegenüber der unteren Spitze in Richtung der Schnecke verschoben hat, die zum Verteilerkegel (14) dreht, während sich im Fall des Schuhs (25) die obere Spitze der Faltkante (29) gegenüber der unteren Spitze in Richtung der Schnecke verschoben hat, die vom Schuh (25) weg dreht.

## Revendications

1. Dispositif de mélange (1) comprenant au moins deux tarières verticales entraînées en rotation (2, 3) dotées d'une lame de mélange en spirale (4), lesquelles tarières sont disposées dans une chambre de mélange (5) avec un fond (6) et une paroi (7) s'étendant autour des tarières, dans lequel, dans une zone (13) entre les tarières sur chaque côté de la chambre de mélange contre la paroi, un cône de distribution (14) est doté d'un bord biseauté (15) qui s'étend vers le haut à partir d'une extrémité inférieure sur le fond vers une partie supérieure (16) sur la paroi (7) ou à côté de celle-ci, où sur chaque côté du bord biseauté (15), une surface de guidage (18, 19) s'incline en oblique vers le fond,
**caractérisé en ce qu'**un patin (25) est monté sur la face inférieure du bord biseauté d'au moins l'un des cônes de distribution (14) avec sur chaque côté d'un bord de pliage libre (29) une surface de guidage ayant un côté (27) qui est raccordé au fond et un côté (28) qui est raccordé au cône de distribution (14), dans lequel l'inclinaison du bord de pliage (29) est moins raide que l'inclinaison du bord biseauté (15) du cône de distribution (14).

2. Dispositif de mélange selon la revendication 1, dans lequel la partie supérieure (16) du bord biseauté (15) du cône de distribution (14) est décalée vis-à-vis de l'extrémité inférieure du bord biseauté (15) dans la direction de la tarière en rotation vers ledit cône de distribution (14).

3. Dispositif de mélange selon la revendication 1, dans lequel la partie supérieure (16) du bord biseauté (15) du cône de distribution (14) est décalée vis-à-vis de l'extrémité inférieure du bord biseauté (15) dans la direction de la tarière en rotation loin dudit cône de distribution (14).

4. Dispositif de mélange selon la revendication 1, 2 ou 3, dans lequel les surfaces de guidage (18, 19) sont courbées de sorte que la ligne d'intersection avec le fond (6) ait un rayon de courbure qui, avec un jeu, correspond au plus grand rayon de la tarière.

5. Dispositif de mélange selon l'une quelconque des revendications précédentes, dans lequel une arête d'usure est prévue autour de la plus basse portée d'au moins l'une des tarières (2, 3), laquelle arête d'usure est interrompue dans l'espace entre les patins opposés.

6. Dispositif de mélange selon l'une quelconque des revendications précédentes, dans lequel les cônes de distribution sont munis d'une face de dépouille (20), qui est adjacente au bord biseauté (15) et qui s'incline en oblique dans la direction latérale (X) à la direction d'une tarière (2) en rotation vers la face de dépouille, dans lequel la direction latérale de la face de dépouille est à un angle par rapport à la ligne (AA) entre les points de rotation des tarières.

7. Dispositif de mélange selon l'une quelconque des 6 revendications précédentes, dans lequel la face de dépouille (20) s'effile à partir du fond (6) vers la partie supérieure.

8. Dispositif de mélange selon l'une quelconque des revendications précédentes 6 à 9, dans lequel la partie supérieure de la face de dépouille (20) est décalée vis-à-vis de la face inférieure de la face de dépouille dans la direction d'une tarière en rotation vers le cône de distribution (14).

9. Dispositif de mélange selon l'une quelconque des revendications 6 à 9, dans lequel la partie supérieure de la face de dépouille (20) est décalée vis-à-vis de la face inférieure de la face de dépouille dans la direction d'une tarière en rotation loin du cône de distribution.

10. Dispositif de mélange selon l'une quelconque des revendications précédentes 6 à 9, dans lequel la partie supérieure de la face de dépouille (20) est à la même distance horizontale des tarières (2, 3) que la face inférieure de la face de dépouille.

11. Dispositif de mélange selon l'une quelconque des revendications précédentes, dans lequel le bord de pliage (29) du patin (25) en projection horizontale s'incline obliquement dans la direction d'une tarière en rotation vers le patin.

12. Dispositif de mélange selon l'une quelconque des revendications précédentes 1 à 11, dans lequel le bord de pliage (29) du patin (25) en projection horizontale s'incline obliquement dans la direction d'une tarière en rotation loin du patin.

13. Dispositif de mélange selon l'une quelconque des revendications précédentes, dans lequel les patins opposés (25) sont décalés l'un vis-à-vis de l'autre sur une distance dans la direction longitudinale du dispositif de mélange.

14. Dispositif de mélange selon l'une quelconque des revendications précédentes, dans lequel l'extrémité supérieure (16) du bord biseauté (15) du cône de distribution (14) est décalée vis-à-vis de l'extrémité inférieure dans la direction de la tarière en rotation vers le cône de distribution (14), tandis que dans le cas du patin, (25) l'extrémité supérieure du bord de pliage (29) est décalée vis-à-vis de l'extrémité inférieure dans la direction de la tarière en rotation loin du patin (25).
